(19) **Europäisches Patentamt / European Patent Office / Office européen des brevets**

(11) **EP 3 745 385 A1**

(12) **EUROPEAN PATENT APPLICATION**
published in accordance with Art. 153(4) EPC

(43) Date of publication:
02.12.2020 Bulletin 2020/49

(21) Application number: 18902230.4

(22) Date of filing: 08.11.2018

(51) Int Cl.:
*G09C 5/00* $^{(2006.01)}$

(86) International application number:
PCT/KR2018/013547

(87) International publication number:
WO 2019/146885 (01.08.2019 Gazette 2019/31)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 24.01.2018 KR 20180008930

(71) Applicant: Kookmin University Industry Academy Cooperation Foundation
Seoul 02707 (KR)

(72) Inventors:
• HAN, Dong Guk
Seoul 01723 (KR)
• WON, Yoo Seung
Seoul 07943 (KR)

• PARK, Ae Sun
Goyang-si, Gyeonggi-do 10296 (KR)
• SIM, Bo Yeon
Goyang-si, Gyeonggi-do 10303 (KR)
• CHO, Young Jin
Seoul 02532 (KR)
• LEE, Jong Hyeok
Seoul 02710 (KR)
• KIM, Tae Jong
Seoul 01450 (KR)

(74) Representative: dompatent von Kreisler Selting Werner -
Partnerschaft von Patent- und Rechtsanwälten mbB
Deichmannhaus am Dom
Bahnhofsvorplatz 1
50667 Köln (DE)

(54) **DEVICE AND METHOD FOR CIPHER DECRYPTION, AND RECORDING MEDIUM FOR RECORDING SAME**

(57) The present invention relates to a device and a method for cipher decryption and a recording medium for recording the same, the device and the method allowing side channel safety verification for a domestic financial IC card to be applied to a block cipher algorithm when the same is performed, thereby enabling efficiency safety verification and remarkably reducing safety verification time. Therefore, the present invention enables a side channel safety verification situation for encryption equipment including a smart IC card, a smart device, embedded equipment and the like, and an assessment institution for information security products to efficiently operate resources, and enables domestic and foreign card companies for designing countermeasures against a domestic financial IC card to design the countermeasures by utilizing the same.

FIG. 3

Start

Receive consumption power of encryption apparatus generated during encryption operation process — S310

Set analysis section of consumption power and determine available resource used to analyze consumption power present in analysis section — S330

Perform first correlation power analysis for plurality of selection points selected from trace of consumption power present in analysis section if available resource satisfies specific criterion, and otherwise, perform second correlation power analysis for single selection point — S350

End

**Description**

TECHNICAL FIELD

The present disclosure relates to decryption technology, and more particularly, to a description apparatus and method that may acquire sensitive information, such as a secret key used for a process in which an encryption algorithm operates in an integrated circuit (IC) card, an e-passport, an Internet of things (IoT) device, and the like.

RELATED ART

In general, encryption equipment including a smart integrated circuit (IC) card, a smart device, embedded equipment, and the like maintains security using an encryption algorithm. Such encryption equipment may externally leak side-channel information including timing, power consumption, electromagnetic emission, and the like while operating an encryption algorithm. Side-channel analysis refers to an analysis method of acquiring sensitive information, such as a secret key used for a process in which an encryption algorithm operates in an IC card, an e-passport, an Internet of things (IoT) device, and the like, using the side-channel information.

[Prior Art Document]

[Patent Document]

(Patent Document 1) Korean Registered Patent NO. 10-1332376 (2013.11.18)

DETAILED DESCRIPTION

TECHNICAL SUBJECT

An example embodiment of the present disclosure provides a decryption apparatus and method that may acquire sensitive information, such as a secret key used for a process in which an encryption algorithm operates in an integrated circuit (IC) card, an e-passport, an Internet of things (IoT) device, and the like, and a recording medium for recording the same.

An example embodiment of the present disclosure provides a decryption apparatus and method that may perform corresponding correlation power analysis at a single point by calculating a correlation between consumption power at one of a plurality of points selected from a trace present in an analysis section and consumption power estimated based on an intermediate value at the plurality of points, and a recording medium for recording the same.

An example embodiment of the present disclosure provides a decryption apparatus and method that may neutralizes masking countermeasures capable of performing efficient decryption by selecting an appropriate correlation power analysis method depending on whether an available resource condition required for correlation power analysis is satisfied, and a recording medium for recording the same.

SOLUTION

In example embodiments, a decryption apparatus may include a consumption power receiver configured to receive consumption power of an encryption apparatus generated during an encryption operation process, an available resource determiner configured to set an analysis section of the consumption power and to determine an available resource used to analyze the consumption power, and a correlation power analyzer configured to select a plurality of points or a single point of a trace present in the analysis section based on the available resource and to perform corresponding correlation power analysis.

The consumption power receiver may be configured to receive the consumption power of the encryption apparatus generated during the encryption operation process using an encryption algorithm to which masking countermeasures are applied.

The available resource determiner may be configured to set, as the analysis section, a section in which consumption power generated during a specific operation process targeted as an analysis target in the encryption operation process is received.

The available resource determiner may be configured to determine at least one of an estimated time and an estimated computation amount used for correlation power analysis for the analysis section.

The correlation power analyzer may be configured to perform the corresponding correlation power analysis for the single point if the estimated time is greater than an available time or if the estimated computation amount is greater than an available computation amount.

The correlation power analyzer may be configured to perform the corresponding correlation power analysis for the plurality of points by calculating a correlation between consumption power preprocessed using a preprocessing function for the plurality of points selected from the trace present in the analysis section and consumption power estimated based on an intermediate value at the plurality of points.

The correlation power analyzer may be configured to perform the corresponding correlation power analysis for the single point by calculating a correlation between consumption power at one of the plurality of points selected from the trace present in the analysis section and consumption power estimated based on an intermediate value at the plurality of points.

The correlation power analyzer may be configured to estimate consumption power by applying a Hamming weight or a Hamming distance to the intermediate value at the plurality of points.

In example embodiments, a decryption method may include receiving consumption power of an encryption apparatus generated during an encryption operation process, setting an analysis section of the consumption power and determining an available resource used to analyze the consumption power, and selecting a plurality of points or a single point of a trace present in the analysis section based on the available resource and performing corresponding correlation power analysis.

In example embodiments, a computer-readable recording medium may include a process of receiving consumption power of an encryption apparatus generated during an encryption operation process, a process setting an analysis section of the consumption power and determining an available resource used to analyze the consumption power, and a process of selecting a plurality of points or a single point of a trace present in the analysis section based on the available resource and performing corresponding correlation power analysis.

EFFECTS

The disclosed technology may have the following effects. Here, since it does not indicate that a specific example embodiment should include all of the following effects or include only the following effects, it should be understood that the scope of the disclosed technology is not limited thereto.

A decryption apparatus and method, and a recording medium for recording the same according to an example embodiment of the present disclosure may perform corresponding correlation power analysis for a single point by calculating a correlation between consumption power at one of a plurality of points selected from a trace present in an analysis section and consumption power estimated based on an intermediate value at the plurality of points.

A decryption apparatus and method, and a recording medium for recording the same according to an example embodiment of the present disclosure may perform efficient decryption by selecting an appropriate correlation power analysis method depending on whether an available resource condition required for correlation power analysis is satisfied.

BRIEF DESCRIPTION OF DRAWINGS

FIG. 1 is a diagram illustrating a decryption system according to an example embodiment of the present disclosure;

FIG. 2 is a block diagram illustrating a decryption apparatus of FIG. 1;

FIG. 3 is a flowchart illustrating a decryption process performed by the decryption apparatus of FIG. 1.

FIG. 4 illustrates an example of a process of performing, by the decryption apparatus of FIG. 1, second correlation power analysis for a substitution-box (S-box) operation to which masking is applied.

FIG. 5 illustrates an example of a process of performing, by the decryption apparatus of FIG. 1, first correlation power analysis for an S-box operation to which masking is applied.

FIG. 6 is a flowchart illustrating a process of performing, by a decryption apparatus, correlation power analysis for a block encryption algorithm to which masking is applied according to an example embodiment of the present disclosure.

BEST MODE

The description related to the present disclosure is merely an example embodiment for structural and functional description and thus, the scope of the present disclosure should not be construed as being limited to embodiments described herein. That is, various modifications and changes may be made to the example embodiments in various forms. Therefore, the scope of the present disclosure should be understood to include the equivalents capable of achieving the technical spirit. Also, it does not indicate that specific example embodiments should include all of purposes or effects proposed herein or include only such effects. Therefore, the scope of the present disclosure should not be understood to be limited thereto.

Meanwhile, the terms used herein should be understood as follows:

The terms "first," "second," etc., are used herein to distinguish one component from other components and the components should not be limited by these terms. For example, a first component may also be termed a second component and, likewise, a second component may be termed a first component.

When a component is referred to as being "connected to" another component, the component may be directly connected to the other component, or one or more other intervening components may be present. In contrast, when a component is referred to as being "directly connected to," there is no intervening component. Likewise, the interpretation may apply to other representations explaining a relationship between components, that is, "between ∼" and "directly between ∼" and "neighboring" and "directly neighboring," and the like.

The singular forms "a," "an," and "the," are intended to include the plural forms as well, unless the context clearly indicates otherwise. It will be further understood that the terms "comprises/comprising (incudes/including)," and "has/having" when used in this specification, specify the presence of stated features, integers, steps, operations, components, elements, or combinations thereof, but do not preclude the presence or addition of one or more other features, integers, steps, operations, components, elements, or combinations thereof.

Identification symbols (e.g., a, b, etc.) in the respective steps are used for clarity of description and are not intended to explain order of the steps. The respective steps may be performed in different order unless specific order is stated in the context otherwise. That is, the respective steps may be performed in the stated order and may be simultaneously performed or may be performed in reverse order.

The present disclosure may be implemented as a computer-readable code in computer-readable record media. Computer-readable record media may include any type of recording devices in which data readable by a computer system is stored. Examples of the media may include read-only memory (ROM), read access memory (RAM), CD-ROM, magnetic tape, floppy disk, an optical data storage device, and the like. Also, the media may be distributed over a network-coupled computer system so that a computer-readable code is stored and executed in a distributed fashion.

Unless otherwise defined, all terms used herein have the same meaning as commonly understood by one of ordinary skill in the art to which the present disclosure pertains. Terms, such as those defined in commonly used dictionaries, should be interpreted as having a meaning that is consistent with their meaning in the context of the relevant art and/or this disclosure, and should not be interpreted in an idealized or overly formal sense unless expressly so defined herein.

Dissimilar to simple power analysis (SPA), differential power analysis (DPA) relates to an analysis method of extracting a sensitive value using a mathematical mechanism with a larger number of traces and may generally include the following five steps.

i) 1st step:

A value that may be interpolated to extract a sensitive value is selected. Function f(d,k) is selected by selecting a known value d, which is not a constant, and k that is a portion of a key, as a sensitive value. That is, d may be a plain text or a ciphertext and f may be XOR or substation-box (S-box). For example, f(d,k)=d XOR k or f(d,k)=S-box(d XOR k).

ii) 2nd step:

Encryption or decryption is performed using D pieces of random data, d=(di, ..., $d_D$). That is, data used for $i^{th}$ encryption or decryption corresponds to di. ($1 \le i \le D$). Here, a power consumption amount measured when performing encryption or decryption corresponding to $d_i$ is $t_i=(t_{i,1}, ..., t_{i,T})$. (T: trace length). That is, the trace matrix T has a size of $D \times T$.

iii) 3rd step:

In this step, a predictable intermediate value is calculated with respect to all of possible key candidate groups. Let all of possible key candidate group vectors be k=($k_1$, ..., $k_K$). (K: number of possible keys). An intermediate value f(d,k) may be easily calculated with data d and key candidate k. An intermediate value matrix V predicted as above has a size of $D \times K$ and has the following elements.

$$v_{i,j}=f(d_i,k_j) \qquad i=1, \ldots, D \qquad j=1, \ldots, K$$

A column j of the matrix V includes intermediate values for key candidate $k_j$. An intermediate value for a correct key necessarily belongs to a column of the matrix V, which is represented by $k_{ck}$.

iv) 4th step:

Since the predicted intermediate value is calculated by setting possible candidate keys through the preceding three steps, a power consumption value corresponding thereto needs to be predicted. That is, the predicted intermediate value matrix V is converted to a predicted power consumption value matrix H. Here, prediction may be performed by analyzing equipment or by implementing an algorithm. In general, if the algorithm is implemented as software, a Hamming weight model is selected. If the algorithm is implemented as hardware, a Hamming distance model is selected.

v) 5th step:

This step relates to a method of directly extracting a key corresponding to a sensitive value. The power consumption value matrix T (D×T) actually measured in the 2nd step and the predicted power consumption value matrix H (D×K) are compared using statistical analysis that is a mathematical mechanism. That is, each column $h_i$ of the matrix H is compared to all of the columns $t_j$ of the matrix T. It represents that a predicted power consumption value is compared to all of locations of a measured power trace with respect to each of possible keys. Therefore, a comparison result value matrix R has a size of K×T and element $r_{i,j}$ represents $h_i$~$t_j$ (~: relationship). An intermediate value $v_{ck}$ estimated as a correct key necessarily has a relationship with a specific column of the actual measured power consumption value matrix T. If an index corresponding to the specific column is ct, a high relationship value of the matrix R is $r_{ck,ct}$.

Correlation power analysis (CPA) exhibits difference in the 4th step and the 5th step of the differential power analysis (DPA), as follows:

$$h_{i,j} = \sum_{k=0}^{n-1} v_{(i,j)k} \left( v_{i,j} = \left( v_{(i,j)0}, v_{(i,j)1}, \ldots, v_{(i,j)n-1} \right)_2, n: number\ of\ bits\ v_{i,j} \right)$$

$$r_{i,j} = \frac{\sum_{d=1}^{D} (h_{d,i} - \overline{h_i}) \cdot (t_{d,i} - \overline{t_j})}{\sqrt{\sum_{d=1}^{D} (h_{d,i} - \overline{h_i})^2 \cdot \sum_{d=1}^{D} (t_{d,i} - \overline{t_i})^2}} \quad (Here, -1 \le r_{i,j} \le 1)$$

As an analysis method of using a correlation used as mathematical statistical data, as $|r_{i,j}|$ becomes closer 0, the correlation is low and it is regarded as a wrong key. As $|r_{i,j}|$ becomes closer to 1, it is regarded as a correct key.

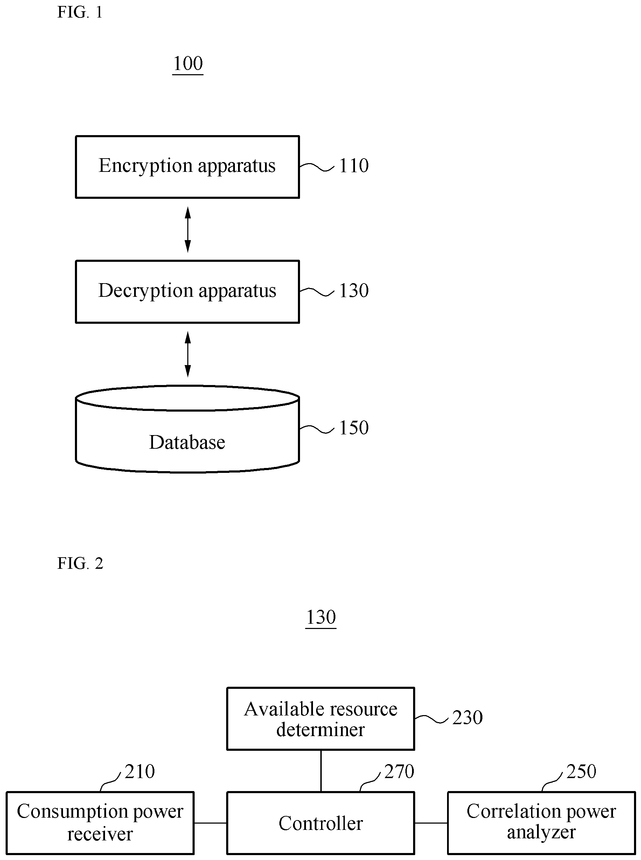

FIG. 1 is a diagram illustrating a decryption system configured to neutralize masking countermeasures according to an example embodiment of the present disclosure.

Referring to FIG. 1, a decryption system 100 may include an encryption apparatus 110, a decryption apparatus 130, and a database 150.

The encryption apparatus 110 may correspond to a computing apparatus that performs an encryption operation using an encryption algorithm, and may be configured as a smartphone, a laptop computer, or a computer, and without being limited thereto, may be configured as various devices including, for example, a smart integrated circuit (IC) card, a smart apparatus, and embedded equipment. The encryption apparatus 110 may connect to the decryption apparatus 130, and may provide power information used in an encryption operation process to the decryption apparatus 130.

The decryption apparatus 130 may be configured as a server corresponding to a computer or a program capable of receiving consumption power from the encryption apparatus 110 and estimating a sensitive value, such as a secret key, through correlation power analysis. The decryption apparatus 130 may connect to the encryption apparatus 110 and may receive consumption power information used for decryption from the encryption apparatus 110.

The decryption apparatus 130 may be configured to include the database 150 and may be configured separate from the database 150. If the decryption apparatus 130 is configured independently from the database 150, the decryption apparatus 130 may connect to the database 150 in a wired or wireless manner and may exchange data.

The database 150 refers to a storage device configured to store a variety of information required for decryption. The database 150 may store consumption power information received from the encryption apparatus 110 and may store information about a plurality of candidate keys and a plurality of pieces of plain text data used for correlation power analysis. However, it is provided as an example only and the database 150 may store information collected or processed in various forms in association with decryption.

The database 150 may be configured as one or more independent sub-databases configured to store information belonging to a specific range and may be configured as a single integrated database in which one or more independent sub-databases are integrated. If the database 150 is configured as one or more independent sub-databases, the respective sub-databases may be connected wirelessly through Bluetooth, wireless fidelity (WiFi), and the like, and may exchange data over a network. If the database 150 is configured as the integrated database, the database 150 may include a controller configured to integrate the respective sub-databases into a single integrated database and to manage data exchange and control flow therebetween.

FIG. 2 is a block diagram illustrating a decryption apparatus of FIG. 2.

Referring to FIG. 2, the decryption apparatus 130 may include a consumption power receiver 210, an available resource determiner 230, a correlation power analyzer 250, and a controller 270.

The consumption power receiver 210 may receive consumption power of the encryption apparatus 110 generated during an encryption operation process. The consumption power received by the consumption power receiver 210 may be used to extract a sensitive value associated with a secret key used while the encryption operation is being performed by the encryption apparatus 110 through power analysis.

In an example embodiment, the consumption power receiver 210 may receive the consumption power of the encryption apparatus 110 generated during the encryption operation process using an encryption algorithm to which masking countermeasures are applied. Here, the masking countermeasures may correspond to a method of coping with side-channel attacks, and more particularly, to a method of removing a correlation between a model estimated by an attacker and an actual power consumption amount such that the attacker may not know an intermediate value generated during an operation of the encryption algorithm. The consumption power receiver 210 may store the consumption power received from the encryption apparatus 110 in the database 150.

The available resource determiner 230 may set an analysis section of the consumption power and may determine an available resource used to analyze the consumption power. The available resource determiner 230 may arrange the consumption power received from the encryption apparatus 110 along a time axis and may display the received consumption power in a graph form, and may select a specific time section continuous on the corresponding graph and may set the selected specific time section as the analysis section. The available resource determiner 230 may determine a resource amount used to analyze the consumption power present in the set analysis section, based on information stored in the database 150. Here, the available resource may correspond to a time or a computation amount used for analysis.

In an example embodiment, the available resource determiner 230 may set a section in which consumption power generated during a specific operation process targeted as an analysis target in the encryption operation process as the analysis section. The available resource determiner 230 may target a specific operation during an operation process of the encryption algorithm.

For example, the available resource determiner 230 may set, as the analysis section, a consumption power section of performing a corresponding S-box operation in the entire consumption power section corresponding to an encryption algorithm process by targeting the S-box operation used by a block encryption algorithm, for example, SEED, an advanced encryption standard (AES), etc., for non-linearity. The available resource determiner 230 may select, from among the entire consumption power traces, a consumption power trace in a specific operation section clearly distinguished from other consumption power traces and may set the selected consumption power trace as the analysis section.

In an example embodiment, the available resource determiner 230 may determine at least one of an estimated time and an estimated computation amount used for correlation power analysis for the analysis section. The available resource determiner 230 may extract, from previous analysis information stored in the database 150, previous analysis information of which analysis conditions including a length of the analysis section, a number of plain text data, a number of candidate keys, and a number of selection points within the analysis section, are similar. The available resource determiner 230 may determine the estimated time or the estimated computation amount used for second correlation power analysis based on the extracted previous analysis information.

If the available resource meets a specific criterion, the correlation power analyzer 250 may perform the second correlation power analysis for a plurality of selection points selected from a trace of the consumption power present in the analysis section, and otherwise, may perform first correlation power analysis for the a single selection point. The correlation power analyzer 250 may perform the second correlation power analysis or the first correlation power analysis depending on whether an amount of necessary available resources is sufficient in a process of extracting a sensitive value from the encryption apparatus 110. In more detail, if an amount of available resources is sufficient, the correlation power analyzer 250 may perform the second correlation power analysis that requires a large amount of available resources. Also, if an amount of available resources is insufficient, the correlation power analyzer 250 may perform the first correlation power analysis that requires a relatively small amount of available resources.

In an example embodiment, if the estimated time is greater than an available time or if the estimated computation amount is greater than an available computation amount, the correlation power analyzer 250 may perform the first correlation power analysis. If an amount of available resources is insufficient due to a time or a computation amount required for the second correlation power analysis being greater than a current available time or available computation amount, the correlation power analyzer 250 may perform the first correlation power analysis that uses a relatively small time or computation amount compared to that used for the second correlation power analysis.

In an example embodiment, although the estimated time is greater than an available time or the estimated computation amount is greater than an available computation amount, the correlation power analyzer 250 may not perform the first correlation power analysis and may perform the second correlation power analysis. The correlation power analyzer 250 may automatically select and perform an appropriate correlation power analysis method at an execution point in time of correlation power analysis based on information about a time or a computation amount used for the entire operation of the decryption system 100. Also, although a significant time is used until a result is acquired by performing the second correlation power analysis due to an insufficient amount of available resources at the execution point in time of correlation power analysis, the correlation power analyzer 250 may perform the second correlation power analysis based on an option selected or preset by the user.

In an example embodiment, the correlation power analyzer 250 may perform the second correlation power analysis by calculating a correlation between consumption power preprocessed using a preprocessing function for a plurality of selection points selected from the trace of the consumption power present in the analysis section and consumption power estimated based on an intermediate value at the plurality of selection points. Here, preprocessing may correspond to a modification step of the $2^{nd}$ step among five steps of the aforementioned correlation power analysis (CPA).

For example, the correlation power analyzer 250 may calculate the preprocessed consumption power by preprocessing the consumption power at the plurality of selection points using the same masking in the trace of the consumption power present in the analysis section in which the S-box operation is targeted. In this case, if a number of selection points is two, multiplication, addition, difference, power of addition, and difference in absolute value between consumption power at the selection points may be used as the preprocessing function. Also, if a number of selection points is three or more, multiplication may be selected and used as the preprocessing function.

Also, the correlation power analyzer 250 may estimate the consumption power based on an intermediate value at the plurality of same selection points to correspond to the preprocessed consumption power. Here, the intermediate value may refer to a value that is calculated as an output in a predetermined step of the encryption algorithm process and used as an input in a subsequent step. The correlation power analyzer 250 may calculate the intermediate value at the plurality of same selection points corresponding to the preprocessed consumption power based on plain text data used as an input in the encryption apparatus 110 and a candidate key used to estimate a sensitive value of the encryption apparatus 110. The correlation power analyzer 250 may estimate consumption power at a corresponding selection point using the calculated intermediate values.

In an example embodiment, the correlation power analyzer 250 may perform the first correlation power analysis by calculating a correlation between consumption power at one of the plurality of selection points selected from the trace of the consumption power present in the analysis section and consumption power estimated based on the intermediate value at the plurality of selection points.

For example, the correlation power analyzer 250 may acquire the consumption power at the plurality of selection points using the same masking in the trace of the consumption power present in the analysis section in which the S-box operation is targeted. Also, the correlation power analyzer 250 may estimate the consumption power based on the intermediate value at the plurality of same selection points to correspond to the acquired consumption power. The correlation power analyzer 250 may calculate the correlation in the same manner with respect to the first correlation power analysis or the second correlation power analysis. There is a difference in that, dissimilar to the first correlation power analysis, the second correlation power analysis uses the consumption power for the plurality of selection points as is instead of preprocessing the consumption power received from the encryption apparatus 110.

In an example embodiment, the correlation power analyzer 250 may estimate the consumption power by applying a Hamming weight or a Hamming distance to the intermediate value at the plurality of selection points. Here, the Hamming weight or the Hamming distance may correspond to a power consumption model configured to estimate the consumption power according to the intermediate value. The power consumption model may be classified into a univariate power consumption model and a multivariate power consumption model based on a number of variables to be considered. The Hamming weight may correspond to the univariate power consumption model and the Hamming distance may correspond to the multivariate power consumption model.

In general, the Hamming distance, as the power consumption model considering two factors, may be applied when the algorithm is implemented as hardware. The Hamming distance may assume that power consumption occurs based on a state shift of data stored in a register by applying a hardware power consumption pattern. In general, the Hamming weight, as the power consumption model considering a single factor, may be applied when the algorithm is implemented as software. The Hamming weight may assume that power consumption occurs based on a data value state.

The controller 270 may control the overall operation of the decryption apparatus 130 and may manage control flow and data flow among the consumption power receiver 210, the available resource determiner 230, and the correlation power analyzer 250.

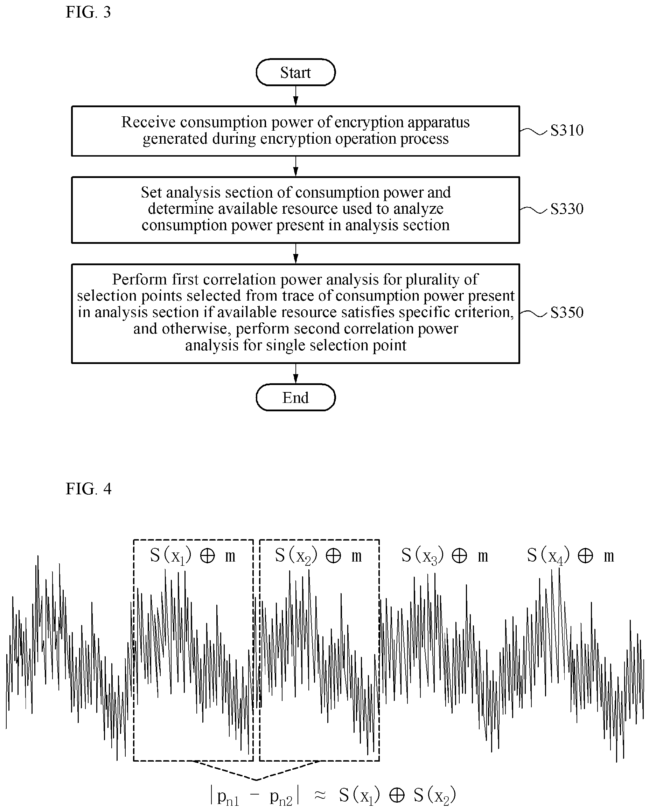

FIG. 3 is a flowchart illustrating a decryption process performed by the decryption apparatus of FIG. 1.

Referring to FIG. 3, the decryption apparatus 130 may receive consumption power of the encryption apparatus 110 generated during an encryption operation process through the consumption power receiver 210 (S310). The decryption apparatus 130 may set an analysis section of the consumption power and may determine an available resource used to analyze the consumption power through the available resource determiner 230 (S330). The decryption apparatus 130 may select a plurality of points or a single point of a trace present in the analysis section based on the available resource and may perform corresponding correlation power analysis through the correlation power analyzer 250 (S350).

In an example embodiment, if the available resource satisfies a specific criterion, the correlation power analyzer 250 may perform second correlation power analysis by calculating a correlation between consumption power preprocessed using a preprocessing function for a plurality of selection points selected from the trace of the consumption power present in the analysis section and consumption power estimated based on an intermediate value at the plurality of selection points.

In an example embodiment, if the available resource does not satisfy the specific criterion, the correlation power analyzer 250 may perform first correlation power analysis by calculating a correlation between consumption power at one of the plurality of selection points selected from the trace of the consumption power present in the analysis section and consumption power estimated based on the intermediate value at the plurality of selection points.

The decryption apparatus 130 may estimate a sensitive value, such as a secret key used for an encryption algorithm applied to the encryption apparatus 110, based on the correlation calculated through the correlation power analyzer 250. In detail, the decryption apparatus 130 may determine estimated consumption power having the highest correlation by collecting power traces consumed during the encryption operation process from the encryption apparatus 110 and by calculating a correlation between consumption power calculated from each of the collected power traces and theoretically estimated consumption power, and may estimate a candidate key used to estimate corresponding consumption power as the sensitive key used by the encryption apparatus 110. In an example embodiment, with respect to the specific encryption apparatus 110, the decryption apparatus 110 may decrypt a sensitive key used by the corresponding encryption apparatus 110 and may use the decrypted sensitive key to verify security of the encryption apparatus 110.

FIG. 4 illustrates an example of a process of performing, by the decryption apparatus of FIG. 1, second correlation power analysis for an S-box operation to which masking is applied.

Referring to FIG. 4, the decryption apparatus 130 may calculate consumption power $|P_{n1}-P_{n2}|$ acquired by preprocessing, using a preprocessing function, consumption power at a plurality of selection points (two selection points in FIG. 4) of an S-box operation to which the same masking is applied during a second correlation power analysis process. Here, the plurality of selection points may correspond to points corresponding to consumption power traces corresponding to the respective S-box operations. The decryption apparatus 130 may calculate estimated consumption power by inputting, to a power consumption model, a value ($S(x_1)$ XOR $S(x_2)$) that is acquired by performing a logic operation of intermediate values predicted at a corresponding selection point during the second correlation power analysis process. The decryption apparatus 130 may perform the second correlation power analysis based on the correlation between the preprocessed consumption power and the estimated consumption power.

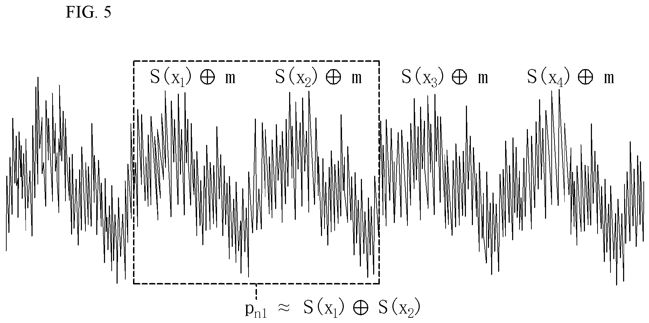

FIG. 5 illustrates an example of a process of performing, by the decryption apparatus of FIG. 1, first correlation power analysis for an S-box operation to which masking is applied.

Referring to FIG. 5, the decryption apparatus 130 may use consumption power ($P_{n1}$) at a plurality of selection points of the S-box operation to which the same masking is applied as is for a first correlation power analysis process, which differs from the second correlation power analysis. In the first correlation power analysis, consumption power to be compared may differ from that of general differential power analysis (DPA).

In more detail, the first correlation power analysis may use consumption power at one of the plurality of selection points within the analysis section and consumption power that is estimated based on a value ($S(x_1)$ XOR $S(x_2)$) calculated with a logic operation of a plurality of intermediate values estimated at the plurality of selection points as a comparison target. Therefore, since the first correlation power analysis does not perform a preprocessing process for the consumption power received from the encryption apparatus 110, it is possible to reduce a time and a computation amount used for correlation power analysis compared to the second correlation power analysis.

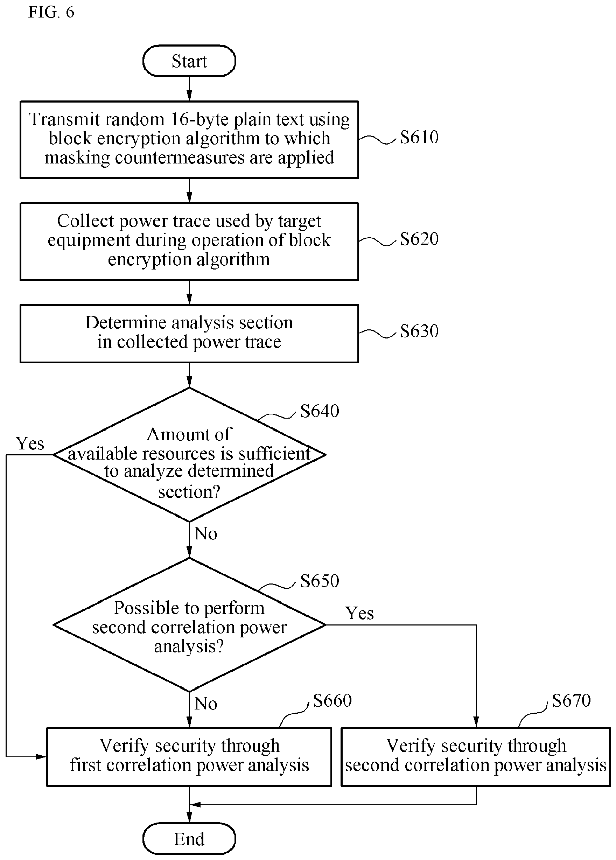

FIG. 6 is a flowchart illustrating a process of performing, by a decryption apparatus, correlation power analysis for a block encryption algorithm to which masking is applied according to an example embodiment of the present disclosure.

Referring to FIG. 6, the decryption apparatus 130 may transmit a plain text with a random 16-byte-length to the encryption apparatus 110 using a block encryption algorithm to which masking countermeasures are applied (S610). The decryption apparatus 130 may collect a power trace used by the encryption apparatus 110 through the consumption power receiver 210 during an operation of the block encryption algorithm in the encryption apparatus 110 (S620).

The decryption apparatus 130 may determine an analysis section in the power trace collected from the encryption apparatus 110 through the available resource determiner 230 (S630). The decryption apparatus 130 may determine an available resource used to analyze the analysis section through the available resource determiner 230 and may verify whether the available resource satisfies a specific condition through the correlation power analyzer 250 (S640). If an amount of available resources is sufficient, the decryption apparatus 130 may perform correlation power analysis for a plurality of points through the correlation power analyzer 250 (S660). If an amount of available resources is insufficient, the decryption apparatus 130 may perform second correlation power analysis (S660) or may perform first correlation power analysis (S670) depending on whether it is possible to perform correlation power analysis for a single point (S650).

Although the description is made by referring to the example embodiments of the present disclosure, those skilled in the art should understand that various modifications and changes may be made to the example embodiments without departing from the spirit and scope of the present disclosure described in the claims.

Supported by National Research & Development Project

Assigned Project NO: 1711055423
Department: Ministry of Science and ICT (MSIT)
Research Management Agency: IITP
Research Business Name: Development of information security source technology
Research Project Name: (ICT Lab) Development of SCR-friendly symmetric key cryptography and application mode
Contribution rate: 1/1
Host Organization: KOOKMIN UNIVERSITY Industry-Academic Cooperation Foundation
Research Period: 2017.04.01-2017.12.31

EXPLANATION OF SYMBOLS

| | | | |
|---|---|---|---|
| 100: | decryption system | | |
| 110: | encryption apparatus | 130: | decryption apparatus |
| 150: | database | | |
| 210: | consumption power receiver | 230: | available resource determiner |
| 250: | correlation power analyzer | 270: | controller |

**Claims**

1. A decryption apparatus comprising:

   a consumption power receiver configured to receive consumption power of an encryption apparatus generated during an encryption operation process;
   an available resource determiner configured to set an analysis section of the consumption power and to determine an available resource used to analyze the consumption power; and
   a correlation power analyzer configured to select a plurality of points or a single point of a trace present in the analysis section based on the available resource and to perform corresponding correlation power analysis.

2. The decryption apparatus of claim 1, wherein the consumption power receiver is configured to receive the consumption power of the encryption apparatus generated during the encryption operation process using an encryption algorithm to which masking countermeasures are applied.

3. The decryption apparatus of claim 1, wherein the available resource determiner is configured to set, as the analysis section, a section in which consumption power generated during a specific operation process targeted as an analysis target in the encryption operation process is received.

4. The decryption apparatus of claim 1, wherein the available resource determiner is configured to determine at least one of an estimated time and an estimated computation amount used for correlation power analysis for the analysis section.

5. The decryption apparatus of claim 4, wherein the correlation power analyzer is configured to perform the corresponding correlation power analysis for the single point if the estimated time is greater than an available time or if the estimated computation amount is greater than an available computation amount.

6. The decryption apparatus of claim 1, wherein the correlation power analyzer is configured to perform the corresponding correlation power analysis for the plurality of points by calculating a correlation between consumption power preprocessed using a preprocessing function for the plurality of points selected from the trace present in the analysis section and consumption power estimated based on an intermediate value at the plurality of points.

7. The decryption apparatus of claim 1, wherein the correlation power analyzer is configured to perform the corresponding correlation power analysis for the single point by calculating a correlation between consumption power at one of the plurality of points selected from the trace present in the analysis section and consumption power estimated based on an intermediate value at the plurality of points.

8. The decryption apparatus of claim 6 or 7, wherein the correlation power analyzer is configured to estimate consumption power by applying a Hamming weight or a Hamming distance to the intermediate value at the plurality of points.

9. A decryption method performed by a decryption apparatus, the method comprising:

receiving consumption power of an encryption apparatus generated during an encryption operation process;
setting an analysis section of the consumption power and determining an available resource used to analyze the consumption power; and
selecting a plurality of points or a single point of a trace present in the analysis section based on the available resource and performing corresponding correlation power analysis.

10. A computer-readable recording medium storing a decryption method performed by a decryption apparatus, comprising:

a process of receiving consumption power of an encryption apparatus generated during an encryption operation process;
a process setting an analysis section of the consumption power and determining an available resource used to analyze the consumption power; and
a process of selecting a plurality of points or a single point of a trace present in the analysis section based on the available resource and performing corresponding correlation power analysis.

FIG. 1

<u>100</u>

```
┌─────────────────────────┐
│  Encryption apparatus   │～110
└─────────────────────────┘
            ↕
┌─────────────────────────┐
│  Decryption apparatus   │～130
└─────────────────────────┘
            ↕
┌─────────────────────────┐
│       Database          │～150
└─────────────────────────┘
```

FIG. 2

<u>130</u>

```
                  ┌──────────────────────┐
                  │  Available resource  │～230
                  │     determiner       │
                  └──────────────────────┘
    ┌210                    ┌270              ┌250
┌─────────────────┐  ┌──────────────┐  ┌──────────────────┐
│Consumption power│  │  Controller  │  │Correlation power │
│    receiver     │  │              │  │    analyzer      │
└─────────────────┘  └──────────────┘  └──────────────────┘
```

FIG. 3

```
                    ┌──────────────┐
                    │    Start     │
                    └──────┬───────┘
                           │
  ┌────────────────────────┴──────────────────────────┐
  │  Receive consumption power of encryption apparatus │ ～S310
  │   generated during encryption operation process    │
  └────────────────────────┬──────────────────────────┘
                           │
  ┌────────────────────────┴──────────────────────────┐
  │      Set analysis section of consumption power and  │
  │       determine available resource used to analyze  │ ～S330
  │     consumption power present in analysis section   │
  └────────────────────────┬──────────────────────────┘
                           │
  ┌────────────────────────┴──────────────────────────┐
  │   Perform first correlation power analysis for plurality of │
  │ selection points selected from trace of consumption power present │
  │ in analysis section if available resource satisfies specific criterion, │ ～S350
  │     and otherwise, perform second correlation power │
  │          analysis for single selection point        │
  └────────────────────────┬──────────────────────────┘
                           │
                    ┌──────┴───────┐
                    │     End      │
                    └──────────────┘
```

FIG. 4

$$S(x_1) \oplus m \qquad S(x_2) \oplus m \qquad S(x_3) \oplus m \qquad S(x_4) \oplus m$$

$$|p_{n1} - p_{n2}| \approx S(x_1) \oplus S(x_2)$$

FIG. 5

$$p_{n1} \approx S(x_1) \oplus S(x_2)$$

FIG. 6

```
                    ┌─────────────┐
                    │    Start    │
                    └─────────────┘
                           │
                           ▼
      ┌────────────────────────────────────────┐
      │  Transmit random 16-byte plain text using │──── S610
      │  block encryption algorithm to which      │
      │  masking countermeasures are applied      │
      └────────────────────────────────────────┘
                           │
                           ▼
      ┌────────────────────────────────────────┐
      │  Collect power trace used by target       │──── S620
      │  equipment during operation of block      │
      │  encryption algorithm                     │
      └────────────────────────────────────────┘
                           │
                           ▼
      ┌────────────────────────────────────────┐
      │  Determine analysis section               │──── S630
      │  in collected power trace                 │
      └────────────────────────────────────────┘
                           │
                           ▼
                        S640
                    Amount of
  Yes          available resources is sufficient
                to analyze determined
                      section?
                           │
                          No
                           │
                           ▼
                        S650
              Possible to perform
              second correlation power      Yes
                    analysis?
                           │
                          No           S660                    S670
                           ▼                                     
      ┌────────────────────────────────┐    ┌────────────────────────────────┐
      │  Verify security through        │    │  Verify security through        │
      │  first correlation power analysis │    │  second correlation power analysis │
      └────────────────────────────────┘    └────────────────────────────────┘
                           │
                           ▼
                    ┌─────────────┐
                    │     End     │
                    └─────────────┘
```

## INTERNATIONAL SEARCH REPORT

| | International application No. |
|---|---|
| | **PCT/KR2018/013547** |

| A. | CLASSIFICATION OF SUBJECT MATTER |
|---|---|

*G09C 5/00(2006.01)i*

According to International Patent Classification (IPC) or to both national classification and IPC

| B. | FIELDS SEARCHED |
|---|---|

Minimum documentation searched (classification system followed by classification symbols)
G09C 5/00; G06F 17/00; G06F 21/00; G06F 9/30; G06F 9/38; G06K 19/073; G09C 1/10; H04L 9/00; H04L 9/06

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: encryption operation process, power consumption, analysis, available resources, waveform, correlation power analysis, ciphering equipment

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2009-0065273 A (ELECTRONICS AND TELECOMMUNICATIONS RESEARCH INSTITUTE) 22 June 2009<br>See paragraphs [0032]-[0048]; claim 1; and figures 3-5. | 1-10 |
| A | KR 10-2016-0114252 A (ELECTRONICS AND TELECOMMUNICATIONS RESEARCH INSTITUTE) 05 October 2016<br>See paragraphs [0020]-[0025]; and figure 1. | 1-10 |
| A | 김태종 등. HIGHT에 대한 부채널 분석 및 대응 방법. April 2015, vol. 25, no. 2, pages 457-465 (KIM, Tae-jong et al. Side Channel Attacks on HIGHT and Its Countermeasures. Journal of The Korea Institute of Information Security & Cryptology.)<br>See pages 460-464; and figures 3-10. | 1-10 |
| A | KR 10-2015-0070689 A (ELECTRONICS AND TELECOMMUNICATIONS RESEARCH INSTITUTE) 25 June 2015<br>See paragraphs [0027]-[0035]; and figure 2. | 1-10 |
| A | KR 10-2006-0057831 A (SAMSUNG ELECTRONICS CO., LTD.) 29 May 2006<br>See paragraphs [0064]-[0081]; and figure 2. | 1-10 |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 FEBRUARY 2019 (21.02.2019) | **22 FEBRUARY 2019 (22.02.2019)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/013547**

| Patent document cited in search report | Publication date | Patent family member | Publication date |
|---|---|---|---|
| KR 10-2009-0065273 A | 22/06/2009 | KR 10-0926749 B1 | 16/11/2009 |
| KR 10-2016-0114252 A | 05/10/2016 | None | |
| KR 10-2015-0070689 A | 25/06/2015 | None | |
| KR 10-2006-0057831 A | 29/05/2006 | DE 102005056814 A1 | 13/07/2006 |
| | | DE 102005056814 B4 | 18/02/2016 |
| | | KR 10-0855958 B1 | 02/09/2008 |
| | | US 2007-0076864 A1 | 05/04/2007 |
| | | US 7778413 B2 | 17/08/2010 |

Form PCT/ISA/210 (patent family annex) (January 2015)

**REFERENCES CITED IN THE DESCRIPTION**

**Patent documents cited in the description**

• KR 101332376